# EUROPEAN PATENT APPLICATION

(11) **EP 3 715 033 A1**
(43) Date of publication of application: **30.09.2020**
(21) Application number: 19165131.4
(22) Date of filing: 26.03.2019
(51) Int. Cl.: B23G 1/32

(54) **METHOD OF DETERMINING MILLING PARAMETERS, METHOD OF MILLING THREADS, AND USE OF A THREAD MILLING CUTTER**

(71) Applicant: VARGUS Ltd., 22311 Nahariya (IL)
(72) Inventor: Hershkovits, Meshulam, 2633730 Kiryat Motzkin (IL); Morgulis, Rafael, 2194012 Karmiel (IL)
(74) Representative: Patentanwälte Ruff, Wilhelm, Beier, Dauster & Partner mbB

(57) **Abstract**

The invention relates to a method of determining milling parameters for milling a thread having a pitch size of p >= 0,5 mm and p <=8 mm using a thread milling cutter, to a method of milling threads with the determined milling parameters, and the use of a thread milling cutter for milling threads with the determined milling parameters, wherein an overall depth of cut is divided into a number N >=2 of superimposed passes, wherein the number N of passes is determined based on the pitch size, and wherein for each of the N passes a depth of cut is determined such that areas of cut (21, 22, 23, 24) of the N passes are equal within tolerances.

## Description

### TECHNICAL FIELD AND PRIOR ART

The invention relates to a method of determining milling parameters, to a method of milling threads with the determined milling parameters, and the use of a thread milling cutter for milling threads with the determined milling parameters.

In order to perform a thread milling operation, it is known to drive a thread milling cutter, such that the cutter performs a helical interpolation movement, wherein the cutter is moved along a helical path and at the same time the cutter is rotated about its axis.

Thread milling cutters of different types are known. For example, EP 0 261 465 A2 shows a thread milling cutter with a shank having a rotation milling axis and with a receptacle with orientation surfaces for receiving a multitooth thread milling plate. When using a multitooth cutting tool, several teeth of the thread to be produced are machined simultaneously, wherein every tooth of the multitooth thread milling cutting tool creates one pitch.

Usually, all stock material is removed in one pass. For thread profiles with increased height, the stock material is removed in two or more superimposed passes. The passes are also referred to as radial passes.

A length of a cutting edge of the thread milling plate can be chosen in accordance with a length of the thread to be produced. Hence, thread milling cutters are usually comparatively long due to industry requirements. Due to the high length of the cutting edge, typically cutting forces are high in thread milling operations. Therefore, thread milling operations are limited in a cutting speed and feed in order to prevent vibrations.

EP 0 950 458 A1 discloses a thread milling cutter having a shank to be received in a spindle of a machine tool, and a milling section adjoining the shank at a front end of the shank, the milling section including a plurality of rows of teeth, which for example for cylindrical threads extend parallel to each other and are separated by flutes, with the teeth of each of the plurality of rows being arranged one after another in an axial direction of the cutter, with at least two adjacent teeth in each row being separated by at least one missing tooth space. In other embodiments, there are no missing tooth spaces or gaps between adjacent teeth. For forming a thread, the thread milling cutter is positioned with respect to a workpiece in which the thread is to be milled, with the cutter being adjusted in an axial direction and fed outwardly or inwardly. Thereafter, a portion of the thread is formed by a helical interpolation movement of the thread milling cutter and a further portion of the thread is formed by at least one additional helical interpolation movement of the thread milling cutter without repositioning the cutter, wherein a number of additional helical interpolation movements corresponds to a number of missing teeth between two adjacent cutting teeth.

### SUMMARY OF THE INVENTION

It is the object of the invention to increase a milling process productivity.

This object is solved by the method of with the features of claim 1, the method of milling a thread with the features of claim 4, and the use of a thread milling cutter with the features of claim 5. Preferred embodiments are defined in the dependent claims.

It is the basic idea of the invention to provide a method of determining milling parameters for milling a thread having a pitch size of p >= 0,5 mm using a thread milling cutter, wherein an overall depth of cut is divided into a number N >=2 of superimposed passes, wherein the number N of passes is determined based on the pitch size, and wherein for each of the N passes a depth of cut is determined such that areas of cut of the N passes are equal within tolerances.

In other words, a thread with an overall depth of cut is not formed in one pass, but in N>= 2 superimposed passes. In the context of the application, passes which together form a thread of an overall depth of cut are referred to as superimposed passes. The infeed method for the superimposed passes can be chosen by the person skilled in the art. In one embodiment, a radial infeed is chosen. The depth of cut or infeed for each pass is calculated in such way that areas of cut will be equal in each pass at least within tolerances. Thereby, equal cutting forces in each pass can be achieved.

A maximum feed rate for a milling process is inter alia limited by an area of chip, which must be below a defined limit value. The area of chip depends inter alia on a thread and tool diameter combination, a feed rate as well as a depth of cut. By dividing the overall thread depth into several passes, the depth of cut for each pass is reduced. Thus, a feed rate of the milling process can be increased. Due to the higher feed rates, although the thread is formed by several passes, a total cycle time can be decreased increased compared to milling processes forming the same thread in only one pass. In addition, the method provides the same average chip thickness in each pass. It allows to machine with the highest productivity in each pass and to prevent vibrations.

In one embodiment, the number N of passes for threads having pitch size between p >= 0,5 mm and p <= 8 mm is determined according to a polynomial function of the 3rd degree for minimizing the number of passes and maximizing a tool life of the thread milling cutter used in consideration of material properties of the thread milling cutter used.

According to a second aspect, a computer program product is provided comprising instructions which, when the program is executed by a computer, cause the computer to carry out the method of determining milling parameters as described above. The computer program product can be stored in the computer or temporarily downloaded to a computer. The computer in one embodiment is provided with a monitor for displaying the milling parameters, which can then be entered into a milling machine. In other embodiments, the computer is wirelessly or via wire connected to a control system of a milling machine. In still another embodiment, the computer forms part or is a control system of a milling machine.

According to a third aspect, a method of milling a thread is provided, wherein the thread with an overall depth of cut is formed with a number N >=2 passes, wherein the number N of passes and the depth of cut of each pass are determined with the method of claim 1 or 2.

According to a fourth aspect, a use of a thread milling cutter for milling a thread having a pitch size of p >= 0,5 mm is provided, wherein the thread with an overall depth of cut is formed with a number N >=2 of superimposed passes, wherein the number N of passes is determined based on the pitch size, and wherein for each of the N passes a depth of cut is determined such that areas of cut for all N>=2 passes are equal within tolerances.

The number N of passes for threads having pitch size between p >= 0,5 mm and p <=8 mm in one embodiment is determined according to a polynomial function of the 3rd degree for minimizing the number of passes and maximizing a tool life of the thread milling cutter in consideration of material properties of the thread milling cutter, wherein the number of passes in particular is determined between N= 2 and N=15 passes.

Different types of thread milling cutters as described for example, but not limited, in documents EP 0 261 465 A2 and/or EP 0950458 A1 can be used for forming the thread.

In one embodiment, the thread milling cutter for forming the thread is a solid end mill having a milling portion with two or more cutting sections separated by flutes. The flutes extend in one embodiment in parallel to an axial direction of the solid end mill. In other embodiments, for example for forming non-cylindrical threads, helically oriented flutes are provided.

In one embodiment, the flutes have a width in the circumferential direction which is between about 10 % and about 75 % of the outer circumference of the thread milling cutter.

When forming the thread in several superimposed passes, thinner chips compared to milling processes forming the thread in only one pass are formed. As thinner chips are formed, a thread milling cutter with small shallow flutes can be used. This in turn allows increasing the number of flutes. The total feed rate per rotation of the thread milling cutter is the arithmetic product of the feed per flute and the number of flutes. Therefore, by increasing the number of flutes, a total feed rate per rotation can be increased and, thus, a cycle time can be decreased.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1:: illustrates a thread milling operation in several superimposed passes, and
- Fig. 2:: shows a thread milling cutter to be used in a thread milling operation for forming a thread in several superimposed passes.

### DETAILED DESCRIPTION OF EMBODIMENTS OF THE INVENTION

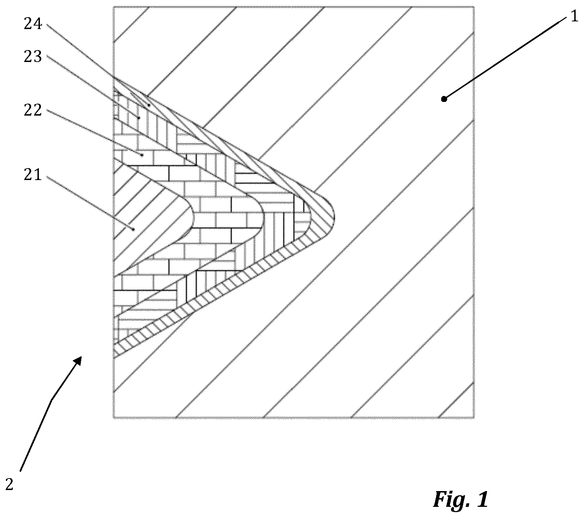

Fig. 1 schematically shows a workpiece 1, in which a thread with a pitch 2 is formed by a milling process with a number N of superimposed passes, in the embodiment shown with four superimposed passes.

The number N of passes per pitch 2 is for example determined based on tables, in which suggested numbers N of passes for different pitch sizes, different materials and/or different thread types are stored. The suggested numbers of passes are for example determined by tests and experiments. In one embodiment, a polynomial function of the 3rd degree is determined, which approaches the suggested numbers N of passes as a function of the pitch size, wherein the function is determined for minimizing the number of passes and maximizing a tool life of a thread milling cutter used for the milling process in consideration of material properties of the thread milling cutter. In one embodiment, the number of passes is determined between N= 2 and N=15 passes.

For each of the N passes, in the embodiment for each of the four passes, a depth of cut is determined such that areas of cut 21, 22, 23, 24 of the N passes are equal within tolerances. As a result, at least essentially equal cutting forces are achieved in each pass.

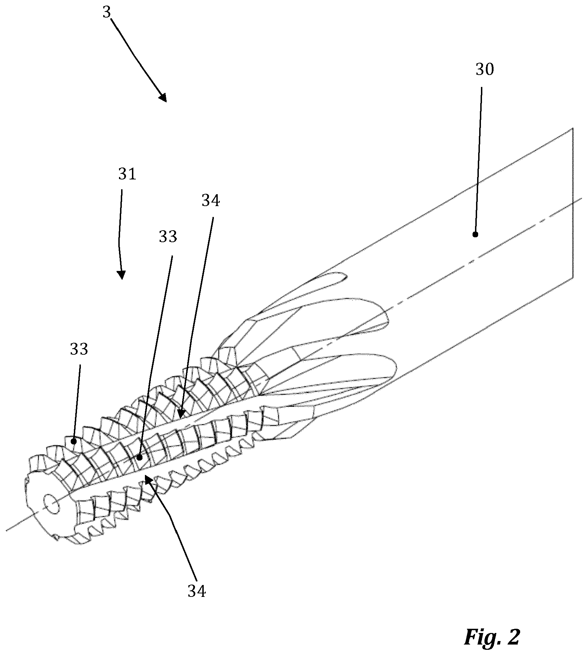

Fig. 2 shows a thread milling cutter 3, which is a solid end mill having a shaft 30 and a milling portion 31. The milling portion 31 along its circumference has several, in the exemplary embodiment shown six cutting sections 33 separated by flutes 34. In other embodiments, more or less than six cutting sections 33 are provided. In the embodiment shown, the flutes 34 are helically oriented. In other embodiments, parallel oriented flutes 34 are provided.

The thread milling cutter 3 shown in Fig. 2 preferably is used for milling a thread having a pitch size of p >= 0,5 mm, wherein the thread with an overall depth of cut is formed with a number N >=2 of superimposed passes, wherein the number N of passes is determined based on the pitch size, and wherein for each of the N passes a depth of cut is determined such that areas of cut 21, 22, 23, 24 (see Fig. 1) of the N passes are equal within tolerances.

When forming the thread in several passes, short thin chips are formed, which can be efficiently removed using the small shallow flutes 34.

## Claims

1. Method of determining milling parameters for milling a thread having a pitch size of p >= 0,5 mm and p <=8 mm using a thread milling cutter, wherein an overall depth of cut is divided into a number N >=2 of superimposed passes, wherein the number N of passes is determined based on the pitch size, and wherein for each of the N passes a depth of cut is determined such that areas of cut (21, 22, 23, 24) of the N passes are equal within tolerances.

2. Method according to claim 1, **characterized in that** the number N of passes for threads having pitch size between p >= 0,5 mm and p <= 8 mm is determined according to a polynomial function of the 3rd degree for minimizing the number of passes and maximizing a tool life of the thread milling cutter in consideration of material properties of the thread milling cutter, wherein the number of passes in particular is determined between N = 2 and N =15 passes.

3. A computer program product comprising instructions which, when the program is executed by a computer, cause the computer to carry out the method of claim 1 or 2.

4. Method of milling a thread, wherein the thread with an overall depth of cut is formed with a number N >=2 of superimposed passes, wherein the number N of passes and the depth of cut of each pass are determined with the method of claim 1 or 2.

5. Use of a thread milling cutter for milling a thread having a pitch size of p >= 0,5 mm and p <= 8 mm, wherein the thread with an overall depth of cut is formed with a number N >= 2 of superimposed passes, wherein the number N of passes is determined based on the pitch size, and wherein for each of the N passes a depth of cut is determined such that areas of cut (21, 22, 23, 24) of the N passes are equal within tolerances.

6. Use of a thread milling cutter according to claim 5, **characterized in that** the number N of passes for threads having pitch size between p >= 0,5 mm and p <=8 mm is determined according to a polynomial function of the 3rd degree for minimizing the number of passes and maximizing a tool life of the thread milling cutter in consideration of material properties of the thread milling cutter, wherein the number of passes in particular is determined between N = 2 and N = 15 passes.

7. Use of a thread milling cutter according to claim 5 or 6, wherein the thread milling cutter is a solid end mill having a milling portion with three or more cutting sections separated by flutes.

8. Use of a thread milling cutter according to claim 7, wherein the flutes have a width in the circumferential direction which is between about 10% and about 75 % of the outer circumference of the thread milling cutter.
